# EUROPÄISCHE PATENTANMELDUNG

(11) **EP 3 239 883 A1**
(43) Veröffentlichungstag der Anmeldung: **01.11.2017**
(21) Anmeldenummer: 16167465.0
(22) Anmeldetag: 28.04.2016
(51) Int. Cl.: G06F 21/53, G06F 21/55

(54) **ERKENNEN EINER ABWEICHUNG EINES SICHERHEITSZUSTANDES EINER RECHENEINRICHTUNG VON EINEM SOLLSICHERHEITSZUSTAND**

(71) Anmelder: Siemens Aktiengesellschaft, 80333 München (DE)
(72) Erfinder: Fusenig, Volker, 80995 München (DE); Stijohann, Jan, 81825 München (DE)

(57) **Zusammenfassung**

Die Erfindung betrifft ein Verfahren zum Erkennen einer Abweichung eines Sicherheitszustandes einer Recheneinrichtung von einem Sollsicherheitszustand, wobei die Recheneinrichtung durch eine virtuelle Maschine abgebildet wird, aufweisend die folgenden Schritte:
- Erstellen einer virtuellen Kopie der virtuellen Maschine, wobei das Erstellen zur Laufzeit der virtuellen Maschine durchgeführt wird und ein Betrieb der Recheneinrichtung unbeeinträchtigt fortgeführt wird;
- automatisches Starten eines Betriebes der virtuellen Kopie;
- automatisches Durchführen einer Sicherheitsprüfung an der virtuellen Kopie, wobei der Betrieb der Recheneinrichtung unbeeinträchtigt fortgeführt wird;
- automatisches Generieren eines Ergebnisses der Sicherheitsprüfung, wobei das Ergebnis einen Sicherheitszustand der virtuellen Kopie beschreibt;
- Erstellen eines Gefährdungshinweises für die Recheneinrichtung, falls das Ergebnis eine Abweichung des Sicherheitszustandes der virtuellen Kopie vom Sollsicherheitszustand der Recheneinrichtung anzeigt.

Die Erfindung betrifft ferner eine Vorrichtung zum Erkennen einer Abweichung eines Sicherheitszustandes einer Recheneinrichtung von einem Sollsicherheitszustand sowie ein Computerprogrammprodukt zur Durchführung des beschriebenen Verfahrens.

## Beschreibung

Zum Überprüfen von Software auf Datenverarbeitungsanlagen werden IT-Sicherheitsüberprüfungen oder IT-Sicherheitsprogramme durchgeführt, welche z.B. Schadsoftware erkennen und ggf. unschädlich machen. Beispielsweise werden Virenscanner eingesetzt, um Schäden auf einem Computer oder einer Rechenanlage zu vermeiden, oder forensische Analysen, um einen Sicherheitsvorfall nachzuvollziehen. Insbesondere sollen Störungen des Betriebs einer Anlage, beispielsweise einer Steuerungsanlage, das Stehlen von Daten oder das Weiterverbreiten von Daten auf andere Systeme verhindert werden. Typischerweise wird Software zur Sicherheitsanalyse, beispielsweise ein Virenscanner, auf einem Zielsystem installiert. Das Zielsystem ist das zu untersuchende System und die Analyse erfolgt auf dem Zielsystem. Eine installierte Analysesoftware beeinflusst oftmals den Betrieb des Systems, beispielsweise durch Performanceeinbußen, Verletzung von Echtzeitanforderungen oder Inkompatibilitäten mit anderer, auf dem Zielsystem installierter Software. Zudem greift eine Sicherheitsanalysesoftware oftmals fälschlicherweise in legitime oder unschädliche Prozesse ein oder blockiert diese.

In virtualisierten Systemen ist es allgemein bekannt, einen Virenscan von außen durchzuführen. Das bedeutet, dass die Software nicht auf dem Zielsystem installiert wird, sondern auf einer Hypervisor-Ebene läuft. Das bedeutet, dass die Analysesoftware auf ein Bild der virtuellen Maschine des Zielsystems zugreifen kann und sogenannte Application Programming Interface-Calls, kurz API-Calls, analysieren kann, wobei der Hypervisor dafür sorgt, dass der virtuellen Maschine die zugesicherten Ressourcen zur Verfügung stehen. Die virtuelle Maschine ist dabei das virtuelle Abbild des Zielsystems, das heißt beispielsweise ein Rechner, auf welchem das Zielsystem virtuell betrieben wird. In speziellen Virtualisierungsumgebungen sind allgemein Virenscans bekannt, um Schadsoftware zu erkennen. Ferner ist es bekannt, einen sogenannten agent oder Agenten auf dem Zielsystem zu installieren, der Daten zur Überprüfung auf Viren auf ein anderes System, wiederum eine virtuelle Maschine, weiterleitet. Dadurch wird die Rechenlast für Virenüberprüfungen auf dem Zielsystem selbst reduziert.

Ebenso sind physikalische Schutzmaßnahmen oder Trennungen von Netzwerken bekannt, welche eine Infektion mit Malware durch Separierung von zu sichernden Systemen vorbeugt.

Die Aufgabe der vorliegenden Erfindung besteht darin, einen Gefährdungszustand einer Recheneinrichtung in Echtzeit zu erkennen. Diese Aufgabe wird durch die Gegenstände der unabhängigen Ansprüche gelöst. Vorteilhafte Ausgestaltungen sind in den abhängigen Ansprüchen angegeben.

Die Erfindung betrifft ein Verfahren zum Erkennen einer Abweichung eines Sicherheitszustandes einer Recheneinrichtung von einem Sollsicherheitszustand, wobei die Recheneinrichtung durch eine virtuelle Maschine abgebildet wird.

Das Verfahren weist dabei die folgenden Schritte auf:
- Erstellen einer virtuellen Kopie der virtuellen Maschine, wobei das Erstellen zur Laufzeit der virtuellen Maschine durchgeführt wird und ein Betrieb der Recheneinrichtung unbeeinträchtigt fortgeführt wird;
- automatisches Starten eines Betriebes der virtuellen Kopie;
- automatisches Durchführen einer Sicherheitsprüfung an der virtuellen Kopie, wobei der Betrieb der Recheneinrichtung unbeeinträchtigt fortgeführt wird;
- automatisches Generieren eines Ergebnisses der Sicherheitsprüfung, wobei das Ergebnis einen Sicherheitszustand der virtuellen Kopie beschreibt;
- Erstellen eines Gefährdungshinweises für die Recheneinrichtung, falls das Ergebnis eine Abweichung des Sicherheitszustandes der virtuellen Kopie vom Sollsicherheitszustand der Recheneinrichtung anzeigt.

Unter einer Recheneinrichtung wird ein Rechner oder eine Rechneranlage zur Realisierung eines IT-Systems, beispielsweise ein Steuerungsrechner, verstanden. Der Sicherheitszustand dieser Recheneinrichtung wird durch das Ergebnis einer Sicherheitsprüfung festgelegt. Wird beispielsweise als Sicherheitsprüfung ein Virenscan durchgeführt und kein Virus gefunden, so ist das Ergebnis ein virenfreier Zustand und der Sicherheitszustand kann beispielsweise gekennzeichnet werden durch einen Speichereintrag virenfrei, welcher im Rahmen der Sicherheitsprüfung erstellt wird. Der Sollsicherheitszustand wird von außen oder im Voraus oder nach Begutachtung im Betrieb für die Recheneinrichtung festgelegt und kann insbesondere als ein Bestandteil das Merkmal aufweisen, dass eine Virenfreiheit attestiert worden sein muss. Der Sollsicherheitszustand kann durch ein Zusammenspiel vieler unterschiedlicher kennzeichnender Eigenschaften der Recheneinrichtung gebildet werden. Beispielsweise kann eine Vielzahl von Kennzeichnungen im Sollsicherheitszustand vorgegeben sein, welche insbesondere in unterschiedlicher Kombination gemeinsam auftretend die Recheneinrichtung als sicher einstufen.

Die zu testende Recheneinrichtung wird virtualisiert ausgeführt, beispielsweise als virtuelle Maschine auf einer gängigen Virtualisierungsumgebung wie beispielsweise VM-Ware oder in einer Public Cloud. Es wird somit ein Verfahren vorgestellt, welches eine virtuelle Maschine auf Sicherheit prüft und auf Grundlage dieser Prüfung auf die reale Recheneinrichtung schließt.

Zunächst wird die zu testende virtuelle Maschine kopiert. Gängige Virtualisierungsumgebungen können virtuelle Maschinen zur Laufzeit kopieren oder klonen, ohne dass der Betrieb des Originalsystems beeinträchtigt wird. Die Kopie, auch Fork genannt, wird automatisch gestartet. Insbesondere wird der Start bei einer Fork nicht explizit durchgeführt, sondern der Start der virtuellen Maschine wird bereits durch das Erstellen der Kopie getriggert. Am laufenden Testsystem der virtuellen Kopie können nun Tests durchgeführt werden für die Sicherheitsprüfung, beispielsweise wird ein Port-Scan durchgeführt oder ein API-call monitoring. Ferner kann alternativ oder zusätzlich Software auf dem Testsystem installiert und ausgeführt werden, wie beispielsweise Virenscanner, und detaillierte Analysen von Logfiles oder Dateien, beispielsweise forensische Analysen.

Der Verlauf des Tests oder die generierten Testergebnisse können anschließend ausgewertet werden. Es wird ein Ergebnis der Sicherheitsprüfung generiert, welches den Sicherheitszustand der virtuellen Kopie beschreibt. Da es sich um eine 1:1 Kopie des virtuellen Originalsystems handelt, liefern die Ergebnisse zugleich Informationen zum Sicherheitszustand dieses virtuellen Originalsystems. Zugleich ist somit auch eine Information über den Sicherheitszustand der realen Rechnereinheit erhältlich.

Das beschriebene Verfahren beinhaltet die Erfassung des Sicherheitszustandes und das Anzeigen einer vorhandenen Gefährdung. In einem nächsten Schritt können Sicherheitsprobleme auf der Recheneinrichtung, also dem realen Originalsystem, behoben werden, beispielsweise im Rahmen einer geplanten Wartung oder im Rahmen von Updates.

Die Schritte zum Erstellen der virtuellen Kopie können automatisiert durchgeführt werden. Mit gängigen Tools wird das Erstellen von Snapshots oder das Kopieren von Snapshots oder deren Ausführung oder die Installation und Ausführung von Software auf der Kopie der virtuellen Maschine automatisiert durchgeführt werden.

Somit ist kein aufwendiges manuelles Security Assessment an einem Testsystem nötig. Auf solchen, einem realen System nachgebildeten Testsystemen, wird aufwendig die identische Software mit gleicher Konfiguration installiert, um ein Abstürzen des Originalsystems durch das Assessment zu vermeiden. Durch das vorgestellte Verfahren kann vorteilhaft ein manuelles Security Assessment ausbleiben. Die Sicherheitsüberprüfung kann an einem laufenden System durchgeführt werden, ohne dessen Betrieb zu beeinflussen. Die Sicherheitsüberprüfung erfolgt somit rückwirkungsfrei. Weil alle Überprüfungen an einer Kopie des Systems durchgeführt werden, können auch invasive Tests durchgeführt werden oder zusätzliche Software installiert werden. Es müssen insbesondere keine Eingriffe oder Konfigurationsänderungen am Originalsystem vorgenommen werden und es kann so sichergestellt werden, dass die Überprüfungen keinen Einfluss auf den Betrieb des originalen Rechensystems haben. Dadurch kann das Verfahren beispielsweise auf den Einsatz von Virenscannern in einem Umfeld ermöglichen, in welchem normalerweise, z.B. aufgrund von Safety Anforderungen, kein Virenscan möglich ist.

Ein bereits bestehendes virtualisiertes System benötigt keinerlei Anpassung und kann das vorgeschlagene Verfahren als Programm auf einer zusätzlichen virtuellen Maschine betreiben.

Neben der Performance werden auch die Funktionalität und die Stabilität des zu testenden Systems nicht beeinflusst.

Anders als bei Lösungen aus dem Cloud-Umfeld kann jede beliebige Standardsoftware für die Sicherheitsüberprüfung eingesetzt werden. Das Verfahren kann überdies ein bestehendes Sicherheitsproblem oder einen Malwarebefall frühzeitig entdecken bevor Auswirkungen der Schadsoftware am System auftreten. Viele kritische Systeme bieten als einzigen Schutz die Separierung von anderen Netzen, was aber keinen 100% Schutz liefern kann. Für solche Systeme bietet das Verfahren einen zusätzlichen Schutz, indem auch hier Angriffe bzw. der Befall mit Schadsoftware frühzeitig erkannt werden können. Durch die Möglichkeit, die Sicherheitsüberprüfung automatisiert durchzuführen, kann das Verfahren vorteilhaft automatisch regelmäßig, zum Beispiel täglich, durchgeführt werden.

Gemäß einer Ausgestaltung stimmt der Sollsicherheitszustand der Recheneinrichtung mit dem Sollsicherheitszustand der virtuellen Kopie überein. Durch die Eigenschaften der virtuellen Kopie, eine 1:1 Kopie der virtuellen Maschine zu sein, stimmen der Sollsicherheitszustand der virtuellen Kopie mit dem Sollsicherheitszustand der virtuellen Maschine und damit der virtualisierten Recheneinrichtung überein. Somit wird wiederum der Sollsicherheitszustand der Recheneinrichtung durch den Sollsicherheitszustand der Kopie der virtuellen Maschine beschrieben.

Gemäß einer Ausgestaltung werden die virtuelle Kopie und die virtuelle Maschine auf einer gemeinsamen Rechnerstruktur ausgeführt. Damit kann auf vorteilhafte Weise die Kopie für die weitere Analyse auf demselben Host-System, insbesondere einem identischen physikalischen Rechner belassen werden. Somit müssen auf vorteilhafte Weise keine Daten auf einen anderen Rechner übertragen werden, was zu Vertraulichkeitsproblemen der Daten führen könnte oder Performance-Nachteile mit sich bringen könnte. Der Rechner-Host könnte somit mit dem Originalsystem und dem Klonsystem vollständig isoliert von anderen Netzen, beispielsweise von einem Intranet oder einem Ethernet, laufen. Eine Kopplung mit einem anderen Netz, welches die Sicherheit des Systems verringern könnte, wird somit verhindert. In einer Vairante werden die virtuelle Kopie und die virtuelle Maschine auch auf einer gemeinsamen Virtualisierungsumgebung virtualisiert. Somit ist eine besonders einfache Realisierung bei begrenzten Ressourcen möglich.

Gemäß einer Ausgestaltung wird die virtuelle Kopie zum Durchführen der Sicherheitsprüfung auf einem separaten, von einer Rechnerstruktur der virtuellen Maschine abweichenden physikalischen Rechner verschoben. Der separate physikalische Rechner kann beispielsweise in einer unsichereren Umgebung als das Originalsystem betrieben werden. Auf vorteilhafte Weise kann das geklonte System über eine Internet- oder Intranet-Verbindung verfügen, auch wenn das Originalsystem nur in einem geschlossenen Netz betrieben wird. Dadurch können beispielsweise neueste Virenupdates für die Analyse verwendet werden oder es können weitergehende Untersuchungen durch Experten von Remote durchgeführt werden, ohne die Angriffsfläche des Originalsystems zu erhöhen.

Gemäß einer Ausgestaltung erfolgt das Verschieben über eine gesicherte Schnittstelle. Zur Übertragung ist eine dedizierte und abgesicherte Schnittstelle von der sicheren in die unsichere Umgebung vorgesehen. Da hier eine potentielle Schwachstelle vorliegt, ist hier eine entsprechend gut geschützte Schnittstelle nötig.

Gemäß einer Ausgestaltung ist der separate physikalische Rechner in einer unsichereren Umgebung als die Rechnerstruktur realisiert.

Gemäß einer Ausgestaltung wird im Falle eines Gefährdungshinweises der Sollsicherheitszustand der Recheneinrichtung an der Recheneinrichtung wiederhergestellt, insbesondere durch Durchführen einer Reparatur oder Wartung. Der Gefährdungshinweis wird beispielsweise an einer Nutzerschnittstelle der Recheneinrichtung angezeigt. Beispielsweise wird er an einen Server weitergeleitet, der zentral Wartungsmaßnahmen einzelner Rechner einer Anlage verwaltet oder veranlasst. Alternativ ist ein Maßnahmenkatalog für erstellte Gefährdungshinweise vorgesehen, anhand dessen automatisch Reparaturmaßnahmen durch die Recheneinrichtung angestoßen werden können.

Gemäß einer Ausgestaltung wird zum Erstellen der virtuellen Kopie ein Bild der virtuellen Maschine kopiert und ein aktueller Arbeitsspeicher gespeichert. Somit wird der aktuelle Sicherheitszustand einer Recheneinrichtung umfassend abgebildet und der Überprüfung zugrunde gelegt.

Gemäß einer Ausgestaltung beinhaltet das Durchführen der Sicherheitsprüfung ein Durchführen des Virenscans oder ein Analysieren von Logdatensätzen oder Dateien.

Gemäß einer Ausgestaltung wird die virtuelle Kopie nach dem Generieren des Ergebnisses verworfen. Insbesondere wird ein Ergebnis der Überprüfung in einem Logeintrag gespeichert, bevor die Kopie verworfen wird.

Die Erfindung betrifft außerdem eine Vorrichtung zum Erkennen einer Abweichung eines Sicherheitszustandes einer Recheneinrichtung von einem Sollsicherheitszustand, wobei die Recheneinrichtung durch eine virtuelle Maschine abgebildet wird, die Vorrichtung aufweisend:
- eine Kopiereinheit zum Erstellen einer virtuellen Kopie der virtuellen Maschine, wobei das Erstellen zur Laufzeit der virtuellen Maschine durchführbar ist und ein Betrieb der Recheneinrichtung unbeeinträchtigt fortführbar ist;
- eine Prüfeinheit zum automatischen Durchführen einer Sicherheitsprüfung an der virtuellen Kopie, wobei der Betrieb der Recheneinrichtung unbeeinträchtigt fortführbar ist, sowie zum automatischen Generieren eines Ergebnisses der Sicherheitsprüfung, wobei das Ergebnis einen Sicherheitszustand der virtuellen Kopie beschreibt;
- Ausgabeeinheit zum Ausgeben eines Gefährdungshinweises für die Recheneinrichtung, falls das Ergebnis eine Abweichung des Sicherheitszustandes der virtuellen Kopie vom Sollsicherheitszustand der Recheneinrichtung anzeigt.

Gemäß einer Weiterbildung ist die Prüfeinheit auf einer gemeinsamen Rechnerstruktur mit der virtuellen Maschine vorgesehen.

Gemäß einer Ausgestaltung ist die Prüfeinheit auf einem separaten, von einer Rechnerstruktur der virtuellen Maschine abweichenden, physikalischen Rechner vorgesehen.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie zum Beispiel ein Mikroprozessor für eine Smartcard oder dergleichen in Frage.

Die Erfindung wird nachfolgend anhand von Ausführungsbeispielen mit Hilfe der Figuren näher erläutert. Es zeigen:
- Figur 1: eine schematische Darstellung eines Ablaufdiagramms zur Veranschaulichung eines Verfahrens zum Erkennen einer Abweichung eines Sicherheitszustandes einer Recheneinrichtung von einem Sollsicherheitszustand gemäß einem ersten Ausführungsbeispiel der Erfindung;
- Figur 2: eine schematische Darstellung einer Vorrichtung zum Erkennen einer Abweichung eines Sicherheitszustandes einer Recheneinrichtung von einem Sollsicherheitszustand gemäß einem zweiten Ausführungsbeispiel der Erfindung;
- Figur 3: eine schematische Darstellung einer Vorrichtung zum Erkennen einer Abweichung eines Sicherheitszustandes einer Recheneinrichtung von einem Sollsicherheitszustand gemäß einem dritten Ausführungsbeispiel der Erfindung.

In den Figuren sind funktionsgleiche Elemente mit denselben Bezugszeichen versehen, sofern nichts anderes angegeben ist.

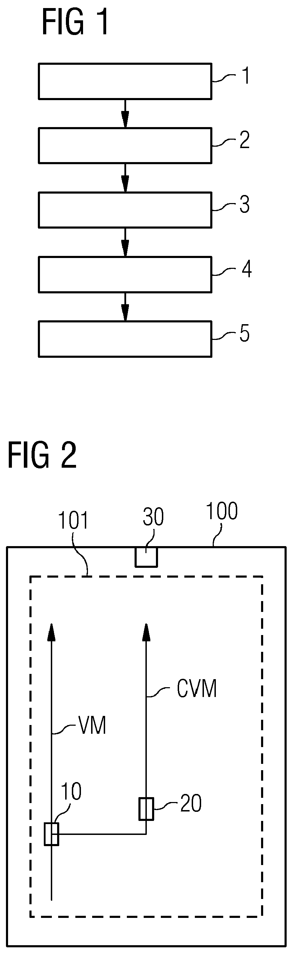

In Figur 1 ist schematisch veranschaulicht, wie ein Verfahren zum Erkennen einer Abweichung eines Sicherheitszustandes einer Recheneinrichtung gemäß einem ersten Ausführungsbeispiel der Erfindung abläuft. In einem ersten Schritt erfolgt ein Erstellen einer virtuellen Kopie 1 einer virtuellen Maschine. Die virtuelle Maschine ist das virtuelle Abbild oder virtual machine image der Recheneinrichtung. Die Recheneinrichtung ist durch einen Sollsicherheitszustand charakterisiert, welcher festlegt, bei Vorliegen welcher Merkmale der Recheneinrichtung ein korrekter oder ungefährdeter Sicherheitszustand zugesprochen wird. In diesem Idealzustand sind beispielsweise alle Kriterien für die Konfiguration der Recheneinrichtung oder die darauf installierte Software erfüllt. Beispielsweise wird nach erfolgreichem Bestehen bestimmter Tests oder Überprüfungen das Erreichen oder Vorliegen des Sollsicherheitszustandes zuerkannt. Beispielsweise beschreibt der Sollsicherheitszustand den Sicherheitszustand zu einem Auslieferungszeitpunkt, in welchem die Recheneinrichtung als ungefährdet oder intakt eingestuft wird.

Das Erstellen der virtuellen Kopie 1 der virtuellen Maschine erfolgt zur Laufzeit der virtuellen Maschine selbst, sodass ein Betrieb der Recheneinrichtung unbeeinträchtigt fortgeführt wird. Bei der virtuellen Kopie der virtuellen Maschine handelt es sich um eine Kopie des virtuellen Abbildes oder virtual machine images, sodass das virtuelle Abbild der Recheneinrichtung in zweifacher Ausführung identisch vorliegt und parallel zueinander ausgeführt wird. Der Betrieb der virtuellen Kopie wird automatisch gestartet 2. Im chronologisch darauffolgenden dritten Schritt erfolgt ein automatisches Durchführen einer Sicherheitsprüfung 3 an der virtuellen Kopie. Wiederum bleibt der Betrieb der Recheneinrichtung vollständig unberührt vom Abarbeiten der Prozesse, die durch die Sicherheitsprüfung angestoßen werden. Damit ist das Echtzeiterfordernis für die Recheneinrichtung trotz Ablauf der Sicherheitsüberprüfung erfüllt.

Es wird im darauffolgenden Schritt ein Ergebnis automatisch generiert 4, welches den Sicherheitszustand der virtuellen Kopie aufgrund der durchgeführten Sicherheitsprüfung beschreibt. Dabei werden beispielsweise Kennzeichen wie Konfigurationseigenschaften beschrieben oder in tabellarischer Auflistung die Testergebnisse aus verschiedenen Sicherheitstests festgehalten, beispielsweise durch Angabe von dem Merkmal "bestanden"/ "nicht bestanden".

Das Ergebnis kann weiter dahingehend analysiert werden, ob in einer Zusammenschau vom Vorliegen des Sollsicherheitszustandes ausgegangen werden kann, oder ob aufgrund der Einzelbestandteile des Ergebnisses eine Abweichung des ermittelten Sicherheitszustandes der virtuellen Kopie vom Sollsicherheitszustand eine Gefährdung der virtuellen Kopie und damit der virtuellen Maschine und somit letztlich der Recheneinrichtung vorliegt. Das Erstellen des Gefährdungshinweises 5 kann automatisch oder auf Anforderung von der Recheneinrichtung veranlasst durchgeführt werden.

In Figur 2 ist schematisch eine Vorrichtung gemäß einem zweiten Ausführungsbeispiel der Erfindung abgebildet, welche einen Gefährdungszustand einer Recheneinrichtung in Echtzeit erkennt. Die Vorrichtung 100 weist eine Kopiereinheit 10 auf, welche die virtuelle Kopie CVM der virtuellen Maschine VM erstellt. Beispielsweise handelt es sich um das Erstellen einer Fork, bei welchem die virtuelle Maschine VM selbst unbeeinträchtigt weiterläuft. Eine Prüfeinheit 20 ist vorgesehen zum automatischen Durchführen der Sicherheitsprüfung an der virtuellen Kopie CVM. Da die virtuelle Maschine VM selbst durch die Prüfeinheit 20 nicht für Rechenschritte zur Sicherheitsüberprüfung in Anspruch genommen wird, läuft der Betrieb der virtuellen Maschine VM und damit der Betrieb der Recheneinrichtung unbeeinträchtigt fort. Die Kopiereinheit 10 sowie die Prüfeinheit 20 sind auf einer gemeinsamen Rechnerstruktur 101 realisiert. Die Ausgabeeinheit 30 kann auf unterschiedliche Weise in der Vorrichtung 100 implementiert sein. Insbesondere bildet die Ausgabe 30 zugleich eine Schnittstelle zur Recheneinrichtung. Auf der Recheneinrichtung selbst kann dann je nachdem, ob ein Gefährdungshinweis vorliegt oder nicht, durch eine Reparatur oder Wartung oder das Laden oder Installieren einer neuen Software reagiert werden. Beispielsweise wird ein Steuerungsvorgang unterbrochen oder ein Datenverarbeitungsvorgang angepasst, bis die Sicherheitslücke behoben ist.

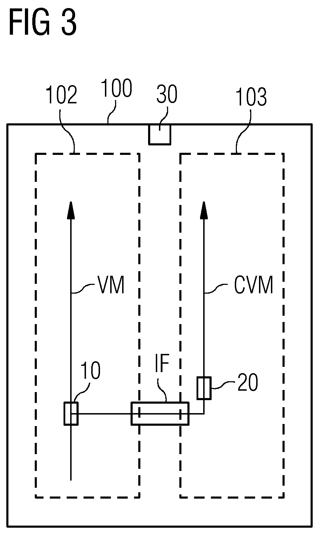

In Figur 3 ist schematisch dargestellt, wie gemäß einem dritten Ausführungsbeispiel der Erfindung getrennte Rechnerstrukturen 102, 103, für die virtuelle Maschine VM und die Kopie der virtuellen Maschine CVM vorgesehen sind. Insbesondere ist die Prüfeinheit 20 auf einem separaten physikalischen Rechner 103 vorgesehen. Eine Schnittstelle IF verbindet die beiden Rechnerstrukturen und stellt insbesondere zugleich den Übergang von einer sicheren Zone, in welcher die Prozessabläufe der virtuellen Maschine VM ablaufen, in eine unsicherere Zone, in welcher die Überprüfung der Kopie der virtuellen Maschine CVM stattfindet.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Erkennen einer Abweichung eines Sicherheitszustandes einer Recheneinrichtung von einem Sollsicherheitszustand, wobei die Recheneinrichtung durch eine virtuelle Maschine abgebildet wird,
aufweisend die folgenden Schritte:
- Erstellen einer virtuellen Kopie (1) der virtuellen Maschine, wobei das Erstellen zur Laufzeit der virtuellen Maschine durchgeführt wird und ein Betrieb der Recheneinrichtung unbeeinträchtigt fortgeführt wird;
- automatisches Starten eines Betriebes (2) der virtuellen Kopie;
- automatisches Durchführen einer Sicherheitsprüfung (3) an der virtuellen Kopie, wobei der Betrieb der Recheneinrichtung unbeeinträchtigt fortgeführt wird;
- automatisches Generieren eines Ergebnisses (4) der Sicherheitsprüfung, wobei das Ergebnis einen Sicherheitszustand der virtuellen Kopie beschreibt;
- Erstellen eines Gefährdungshinweises (5) für die Recheneinrichtung, falls das Ergebnis eine Abweichung des Sicherheitszustandes der virtuellen Kopie vom Sollsicherheitszustand der Recheneinrichtung anzeigt.

2. Verfahren nach Anspruch 1, wobei der Sollsicherheitszustand der Recheneinrichtung mit dem Sollsicherheitszustand der virtuellen Kopie übereinstimmt.

3. Verfahren nach einem der Ansprüche 1 oder 2, wobei die virtuelle Kopie und die virtuelle Maschine auf einer gemeinsamen Rechnerstruktur ausgeführt werden.

4. Verfahren nach einem der Ansprüche 1 oder 2, wobei die virtuelle Kopie zum Durchführen der Sicherheitsprüfung auf einen separaten, von einer Rechnerstruktur der virtuellen Maschine abweichenden physikalischen Rechner verschoben wird.

5. Verfahren nach Anspruch 4, wobei das Verschieben über eine gesicherte Schnittstelle erfolgt.

6. Verfahren nach einem der Ansprüche 4 oder 5, wobei der separate physikalische Rechner in einer unsichereren Umgebung als die Rechnerstruktur realisiert ist.

7. Verfahren nach einem der vorstehenden Ansprüche, wobei im Falle eines Gefährdungshinweises der Sollsicherheitszustand der Recheneinrichtung an der Recheneinrichtung wiederhergestellt wird, insbesondere durch Durchführen einer Reparatur oder Wartung.

8. Verfahren nach einem der vorstehenden Ansprüche, wobei zum Erstellen der virtuellen Kopie ein Bild der virtuellen Maschine kopiert wird und ein aktueller Arbeitsspeicher gespeichert wird.

9. Verfahren nach einem der vorstehenden Ansprüche, wobei das Durchführen der Sicherheitsprüfung ein Durchführen eines Virenscans, ein Analysieren von Logdatensätzen oder Dateien beinhaltet.

10. Verfahren nach einem der vorstehenden Ansprüche, wobei die virtuelle Kopie nach dem Generieren des Ergebnisses verworfen wird.

11. Vorrichtung (100) zum Erkennen einer Abweichung eines Sicherheitszustandes einer Recheneinrichtung von einem Sollsicherheitszustand, wobei die Recheneinrichtung durch eine virtuelle Maschine (VM) abgebildet wird,
die Vorrichtung aufweisend:
- eine Kopiereinheit (10) zum Erstellen einer virtuellen Kopie (CVM) der virtuellen Maschine, wobei das Erstellen zur Laufzeit der virtuellen Maschine (VM) durchführbar ist und ein Betrieb der Recheneinrichtung unbeeinträchtigt fortführbar ist;
- eine Prüfeinheit (20) zum automatischen Durchführen einer Sicherheitsprüfung an der virtuellen Kopie (CVM), wobei der Betrieb der Recheneinrichtung unbeeinträchtigt fortführbar ist, sowie zum automatischen Generieren eines Ergebnisses der Sicherheitsprüfung, wobei das Ergebnis einen Sicherheitszustand der virtuellen Kopie (CVM) beschreibt;
- Ausgabeeinheit (30) zum Ausgeben eines Gefährdungshinweises für die Recheneinrichtung, falls das Ergebnis eine Abweichung des Sicherheitszustandes der virtuellen Kopie (CVM) vom Sollsicherheitszustand der Recheneinrichtung anzeigt.

12. Vorrichtung nach Anspruch 11, wobei die Prüfeinheit (20) auf einer gemeinsamen Rechnerstruktur (101) mit der virtuellen Maschine vorgesehen ist.

13. Vorrichtung nach Anspruch 11, wobei die Prüfeinheit (20) auf einem separaten, von einer Rechnerstruktur (102) der virtuellen Maschine (VM) abweichenden physikalischen Rechner (103) vorgesehen ist.

14. Vorrichtung nach Anspruch 13, ferner aufweisend eine gesicherte Schnittstelle (IF) zwischen der Rechnerstruktur (102) der virtuellen Maschine (VM) und dem physikalischen Rechner (103).

15. Computerprogrammprodukt, welches auf einer programmgesteuerten Einrichtung die Durchführung des Verfahrens nach einem der Ansprüche 1 bis 10 veranlasst.
